Europäisches Patentamt

European Patent Office

Office européen des brevets

(19)

(11) Numéro de publication : **0 410 910 B1**

## (12) FASCICULE DE BREVET EUROPEEN

(45) Date de publication du fascicule du brevet :
06.10.93 Bulletin 93/40

(51) Int. Cl.⁵ : **G01L 9/00, G01B 7/18**

(21) Numéro de dépôt : **90420354.4**

(22) Date de dépôt : **23.07.90**

(54) **Dispositif de mesure de déformation d'une membrane.**

(30) Priorité : **27.07.89 FR 8910387**

(43) Date de publication de la demande :
**30.01.91 Bulletin 91/05**

(45) Mention de la délivrance du brevet :
**06.10.93 Bulletin 93/40**

(84) Etats contractants désignés :
**DE ES FR GB IT SE**

(56) Documents cités :
**DE-B- 2 608 381
FR-A- 2 438 829
US-A- 4 133 100
US-A- 4 140 023**

(73) Titulaire : **SEXTANT Avionique
5/7 rue Jeanne Braconnier Parc Tertiaire
F-92366 Meudon la Forêt Cedex (FR)**

(72) Inventeur : **Varacca, Henri
Les Hauts de Montélier
F-26120 Montelier (FR)**

(74) Mandataire : **de Beaumont, Michel
1bis, rue Champollion
F-38000 Grenoble (FR)**

EP 0 410 910 B1

**Description**

La présente invention concerne un dispositif de mesure des déformations d'une membrane, ces déformations résultant d'un phénomène physique tel qu'une variation de pression de part et d'autre de cette membrane ou une accélération.

La présente invention concerne plus particulièrement de tels dispositifs de mesure dans lesquels la détection des déformations est assurée par des jauges piézorésistives constituées d'une couche épaisse (épaisseur de l'ordre de la dizaine de micromètres) d'un matériau piézorésistif déposé par exemple par sérigraphie ou par jet d'encre.

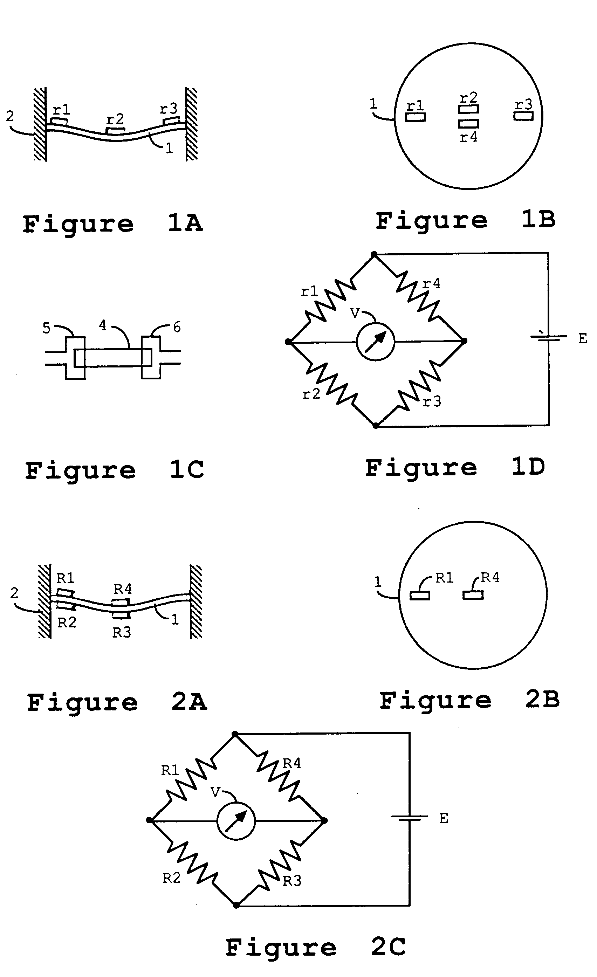

L'état de la technique dans ce domaine va être rappelé en relation avec les figures 1A à 1D.

Un capteur à membrane typique comprend une membrane souple 1 encastrée sur son pourtour circulaire par un scellement sur un support 2. Cette membrane est, par exemple, en céramique d'$Al_2O_3$, de même que le support. Des dispositifs de ce type sont généralement utilisés à la mesure de pressions pour détecter des éventuelles différences de pression de part et d'autre de la membrane.

En effet, sous l'action d'une pression la membrane se déforme et des jauges piézorésistives (simples ou doubles) sont disposées sur la membrane pour en mesurer les déformations.

Selon une réalisation classique, ces jauges sont au nombre de quatre, deux d'entre elles, r1 et r3, étant placées à la périphérie et deux d'entre elles r2 et r4, étant placées au voisinage du centre de la membrane. Ces quatre jauges sont sur la même face de la membrane car on considère généralement que cela simplifie la fabrication et permet de mieux ajuster les quatre jauges à de mêmes valeurs notamment du fait qu'elles résulteront exactement du même dépôt et du même processus de fabrication.

Un exemple d'une telle jauge est représenté en vue de dessus en figure 1C. La substance piézorésistive 4 déposée en couche épaisse est placée entre deux métallisations 5 et 6 déposées au préalable. Les dimensions de la jauge sont de l'ordre du mm. Il s'agit là d'un exemple de jauge particulièrement simplifié mais l'homme de l'art pourra utiliser différents types de jauges plus élaborées.

Les jauges sont généralement montées dans un pont de Wheatstone de la façon illustrée en figure 1D. Les deux jauges r1 et r3 situées à la périphérie de la membrane sont opposées dans le pont de même que les deux jauges situées au centre. Ainsi, au repos, les quatre jauges r1 à r4 ayant la même résistance r0, un voltmètre V placé dans une diagonale du pont dont l'autre diagonale est alimentée par une tension E verra une tension nulle.

Lors d'une déformation, les résistances des jauges r1 et r3 varieront dans un premier sens et les résistances des jauges r2 et r4 en sens opposé. Si $\Delta r$

désigne la variation de la résistance d'une jauge, la tension V détectée sera de la forme :

$$V = V0 + E0\,[\Delta r2 - \Delta r1 + \Delta r4 - \Delta r3]\,/\,4r0, \quad (1)$$

V0 étant une tension d'erreur normalement constante et que l'on peut rendre très faible par ajustement des dimensions des portions de couches piézorésistives et/ou en prévoyant des résistances externes réglables éventuellement formées à la périphérie de la membrane en des emplacements non soumis à contraintes et accessibles après montage de la membrane sur son support.

Ainsi, au premier abord, une telle structure donne un résultat satisfaisant.

Pour obtenir des mesures de pression indépendantes des variations de température, on se place à une température de consigne pour effectuer les mesures. Toutefois, il se produit un phénomène d'hystérésis lié aux variations thermiques. En effet, lors de cycles thermiques, il apparaît des contraintes résiduelles sur les résistances, ces contraintes étant différentes selon que cette témperature de consigne est atteinte en partant d'une valeur de température haute ou d'une valeur de température basse. De plus, cette hystérésis ne sera pas la même pour les jauges périphériques et pour les jauges centrales. Cela est dû au fait connu en lui-même que, pour les jauges périphériques et pour les jauges centrales, le rapport entre la sensibilité transversale et la sensibilité longitudinale n'est pas le même. Ainsi, si l'on reprend l'équation (1) ci-dessus, en plus des variations de résistance liées aux déformations, on aura une variation de résistance supplémentaire liée à l'histoire thermique de la jauge. Cette différence ne s'éliminera pas du fait qu'elle a le même sens pour les jauges r2 et r4 situées de façon centrale, d'une part, et pour les jauges r1 et r3 situées de façon périphérique, d'autre part. Cette hystérésis est pas tolérable dès que l'on veut atteindre des précisions meilleures que le pourcent.

Des problèmes similaires se posent avec une structure à capteurs centraux face à face tels que décrits dans FR-A-2438829.

Pour pallier cet inconvénient, on a essayé dans l'art antérieur diverses solutions notamment en ce qui concerne la forme des jauges, le matériau de la couche épaisse piézorésistive et les processus de dépôt et de cuisson. Toutefois, ces essais n'ont pas donné de résultats satisfaisants.

La présente invention a pour objet d'éliminer les erreurs dues à cet effet d'hystérésis thermique.

Pour atteindre cet objet, la présente invention prévoit un dispositif de mesure des déformations d'une membrane souple scellée par sa périphérie à un support et sur laquelle sont formées quatre jauges constituées d'une couche épaisse d'une matériau piezorésistif et connectées en pont de Wheatstone ; les jauges sont disposées de part et d'autre de la membrane avec, sur chaque face, une jauge au voisinage du centre et une jauge au voisinage de la périphérie ;

une jauge centrale et la jauge périphérique de la face opposée sont connectées dans des branches opposées du pont, deux jauges de la même face ayant leur point de connexion relié à une borne d'alimentation du pont.

Dans un mode de réalisation de la présente invention, le support constitue une enceinte reliée à un circuit pneumatique, d'où il résulte que la membrane se déplace en fonction des variations de pression sur ses deux faces et que le dispositif constitue un capteur de pression.

Ces objets, caractéristiques et avantages ainsi que d'autres de la présente invention seront exposés plus en détail dans la description suivante d'un mode de réalisation particulier faite en relation avec les figures jointes parmi lesquelles :

les figures 1A à 1D destinées à illustrer l'état de la technique ont été décrites précédemment ;

les figures 2A et 2B représentent respectivement une vue en coupe schématique et une vue de dessus schématique d'une membrane munie de jauges piézorésistives selon la présente invention ; et

la figure 2C représente un montage en pont selon la présente invention des jauges utilisées.

Selon la présente invention, comme dans l'art antérieur, une membrane souple 1 est scellée à un support périphérique 2. Toutefois, les jauges ne sont plus disposées toutes sur la même face de la membrane mais sont disposées de part et d'autre de celle-ci. Ainsi, sur la face supérieure de la membrane, on trouve une jauge périphérique R1 et une jauge centrale R4 et, sur la face inférieure de la membrane, on trouve une jauge périphérique R2 et une jauge centrale R3. Ces jauges sont disposées en pont de la façon illustrée en figure 2C, c'est-à-dire que la jauge périphérique d'une face (R1 ou R2) est disposée dans la branche opposée du pont par rapport à la jauge centrale de la face opposée (R3 ou R4).

On notera que, selon la présente invention, du fait de la disposition opposée des jauges, leurs caractéristiques qui résultent de dépôts distincts peuvent présenter de légers écarts mais que les jauges d'une même face présenteront les mêmes caractéristiques. Il est donc possible, par des procédés d'ajustement classiques tels que ceux utilisés dans l'art antérieur, d'avoir, au repos, R1 = R4 et R2 = R3 avec de mêmes caractéristiques piézorésistives et thermiques pour les jauges situées sur une même face. On a donc bien, en l'absence de contraintes, un pont équilibré puisque le produit R1.R3 = R2.R4. Mais, cette fois-ci, en reprenant l'équation (1), on voit que, s'il subsiste des contraintes résiduelles dues à l'histoire thermique du dispositif, leurs effets seront identiques pour les jauges centrales d'une part et sur les jauges latérales d'autre part, et s'élimineront.

Le montage selon la présente invention a été testé dans des conditions réelles et il s'est avéré qu'il fournissait bien les résultats prévus, même si le dispositif est agencé pour que, sous la contrainte maximale à mesurer, le déplacement de la membrane ne soit pas négligeable devant son épaisseur.

Bien que la présente invention ait été décrite ci-dessus essentiellement dans le cadre d'une application à un capteur de pression, on notera qu'une membrane déformable selon l'invention est susceptible d'autres applications et peut par exemple être utilisée à des mesures d'accélération.

La présente invention est susceptible de diverses variantes et modifications qui apparaîtront à l'homme de l'art qui pourra notamment sélectionner la forme des jauges et le matériau de la couche épaisse piézorésistive. En outre, la présente invention n'est pas limitée au mode de réalisation représenté dans lequel des jauges des deux faces de la membrane sont mutuellement opposées. L'homme de l'art pourra choisir librement le positionnement de ces jauges du moment que l'on trouve sur chaque face une jauge sensiblement centrale et une jauge sensiblement périphérique. On pourra également placer sur la membrane des jauges supplémentaires destinées par exemple à des mesures de température.

**Revendications**

1. Dispositif de mesure des déformations d'une membrane souple (1) scellée par sa périphérie à un support (2) et sur laquelle sont formées quatre jauges constituées d'une couche épaisse d'un matériau piézorésistif et connectées en pont de Wheatstone, dans lequel les jauges sont disposées de part et d'autre de la membrane avec, sur chaque face, une jauge (R3, R4) au voisinage du centre, caractérisé en ce qu'il comprend en outre, sur chaque face, une jauge (R1, R2) au voisinage de la périphérie, une jauge centrale et la jauge périphérique de la face opposée étant connectées dans des branches opposées du pont, deux jauges de la même face ayant leur point de connexion relié à une borne d'alimentation du pont.

2. Dispositif de mesure des déformations d'une membrane selon la revendication 1, dans lequel la membrane et son support sont en céramique.

3. Dispositif de mesure des déformations d'une membrane selon la revendication 1, dans lequel ledit support constitue une enceinte reliée à un circuit pneumatique, d'où il résulte que la membrane se déplace en fonction des variations de pression sur ses deux faces et que ledit dispositif constitue un capteur de pression.

**Claims**

1. A device for measuring the deformations of a flexible diaphragm (1) sealed at its periphery to a support (2) and wherein are formed four sensors constituted by a thick layer of piezo-resistive material and connected as a Wheatstone bridge, wherein the sensors are arranged on both sides of the diaphragm with, on each surface, a sensor (R3, R4) at the neighborhood of the center, characterized in that it further comprises, on each side, a sensor (R1, R2) at the neighborhood of the periphery, a central sensor and a peripheral sensor of the opposite surface being connected in opposite legs of the bridge, two sensors of the same side having their connection point connected to a supply terminal of the bridge.

2. A device for measuring the deformations of a diaphragm according to claim 1, characterized in that the sensor and its support are made of ceramics.

3. A device for measuring the deformations of a diaphragm according to claim 1, characterized in that said support constitutes a chamber connected to a pneumatic circuit, whereby the diaphragm moves as a function of the pressure variations on its two surfaces and said device constitutes a pressure sensor.

**Patentansprüche**

1. Vorrichtung zum Messen der Deformationen einer elastischen Membran (1), die an ihrer Peripherie mit einem Träger (2) verbunden ist und auf der vier Fühler ausgebildet sind, die aus einer dicken Schicht eines piezoresistiven Materiales bestehen und als Wheatstone-Brücke miteinander verbunden sind, wobei die Fühler auf beiden Seiten der Membran mit auf jeder Seite einem Fühler (R3, R4) in der Nähe des Zentrums angeordnet sind, dadurch gekennzeichnet, daß die Vorrichtung außerdem auf jeder Seite einen Fühler (R1, R2) in der Nähe der Peripherie aufweist, wobei ein zentraler Fühler und der periphere Fühler auf der gegenüberliegenden Seite in gegenüberliegenden Zweigen der Brücke gelegen und zwei Fühler auf der gleichen Seite mit ihrem Verbindungspunkt an eine Versorgungsquelle der Brücke geschaltet sind.

2. Vorrichtung zum Messen der Deformationen einer Membran nach Anspruch 1, wobei die Membran und ihr Träger aus Keramik sind.

3. Vorrichtung zum Messen der Deformationen einer Membran nach Anspruch 1, wobei der Träger eine mit einer pneumatischen Schaltung verbundene Kammer bildet, so daß die Membran sich als Funktion der Änderungen des Druckes auf ihre beiden Seiten deformiert, und die Vorrichtung einen Drucksensor bildet.

Figure 1A

Figure 1B

Figure 1C

Figure 1D

Figure 2A

Figure 2B

Figure 2C